## Europäisches Patentamt
## European Patent Office
## Office européen des brevets

(19)

(11) Numéro de publication: **0 343 055**
**A1**

(12)

# DEMANDE DE BREVET EUROPEEN

(21) Numéro de dépôt: **89401337.4**

(51) Int. Cl.⁴: **H 02 J 7/00**

(22) Date de dépôt: **12.05.89**

(30) Priorité: **16.05.88 FR 8806550**

(43) Date de publication de la demande:
**23.11.89   Bulletin   89/47**

(84) Etats contractants désignés:
**BE CH DE ES FR GB IT LI LU NL**

(71) Demandeur: **AGLO S.A.**
**40, rue Carnot**
**F-92150 Suresnes  (FR)**

(72) Inventeur: **Veistroffer, René**
**188, rue de Courbevoie**
**F-92000 Nanterre  (FR)**

**Boneil, Jean-Pierre**
**2, Square de la Baume**
**F-78150 Rocquencourt  (FR)**

(74) Mandataire: **Picard, Jean-Claude Georges et al**
**Cabinet Plasseraud 84, rue d'Amsterdam**
**F-75009 Paris  (FR)**

(54) Chargeur automatique apte à charger plusieurs batteries.

(57) Il s'agit d'un chargeur (1) automatique apte à charger plusieurs batteries (2a, 2b, 2c, 2d) amovibles, comprenant un bloc (3) d'alimentation en électricité à partir du réseau et plusieurs modules de charge de batterie (4a, 4b, 4c, 4d). Il comporte au moins un rail de liaison électrique et de fixation sur lequel sont connectés et fixés rigidement, de façon amovible, le bloc d'alimentation et les modules de charge, avec des moyens de commande automatique de l'enclenchement et de l'arrêt de la charge, avec signalisation.

FIG.1.

EP 0 343 055 A1

Description

## Chargeur automatique apte à charger plusieurs batteries

La présente invention concerne les chargeurs automatiques aptes à charger plusieurs batteries (accumulateurs) amovibles, du type comprenant un bloc commun d'alimentation en électricité à partir du réseau électrique et plusieurs modules de chargement de batterie, chaque module comportant des moyens de régulation agencés pour délivrer une intensité constante de charge à la batterie, des moyens de détection de la présence d'une batterie dans le module et des moyens de commande automatique et de signalisation de l'enclenchement et de l'arret de la charge de ladite batterie.

Elle trouve une application particulièrement importante, bien que non exclusive, dans le domaine du chargement des batteries, accumulateurs ou piles rechargeables de faible volume, de tension 6 V à 24 V ou plus, au cadmium-nickel, et demandant un temps de charge compris entre 1 et 7 heures par exemple.

On connaît déjà des chargeurs de batteries du type ci-dessus défini, par exemple pour plusieurs radio-émetteurs-récepteurs, permettant l'enclenchement et l'arrêt automatiques du chargement des batteries qui sont connectées aux chargeurs. Les chargeurs de la technique antérieure ne sont toutefois pas adaptés à charger différents types de batteries sous différentes tensions.

La présente invention vise à fournir un chargeur automatique apte à charger plusieurs batteries (accumulateurs), répondant mieux que ceux antérieurement connus aux exigences de la pratique, notamment en ce qu'il permet la charge automatique de batteries, sans risque de surcharge, quel que soit l'état de charge initial des batteries, en ce qu'il permet la charge simultanée de plusieurs batteries, de volume, de capacité et de tension différents avec le même bloc d'alimentation, en ce qu'il permet le changement d'un module de chargement en cas de défaillance, sans avoir à immobiliser ou à changer la totalité des modules de chargement et le bloc d'alimentation, en ce qu'il est de fabrication simple, peu coûteuse, et en ce qu'il est de mise en oeuvre aisée et fiable.

Dans ce but, l'invention propose un chargeur automatique apte à charger plusieurs batteries amovibles du type accumulateus ou piles rechargeables, comprenant un bloc d'alimentation en électricité à partir du réseau et plusieurs modules de chargement de batterie, chaque module comportant des moyens de régulation pour délivrer l'intensité de charge correspondant à la batterie à charger, et des moyens de détection de la présence de ladite batterie dans le module et de commande automatique et de signalisation de l'enclenchement et de l'arrêt de la charge de ladite batterie, caractérisé en ce qu'il comporte au moins un rail allongé de liaison électrique et de fixation sur lequel sont connectés électriquement et fixés rigidement, mais de façon amovible, le bloc d'alimentation et les modules de charge, ce rail de liaison portant une série de conducteurs pour l'amenée des différentes tensions du bloc aux modules, tandis que le bloc et chaque module comportent des languettes qui sont en contact électrique avec lesdits conducteurs lorsque le bloc ou chaque module est fixé rigidement sur ledit rail.

La présente invention sera mieux comprise à l'examen d'un mode particulier de réalisation donné ci-après à titre d'exemple, non limitatif, en faisant référence aux dessins qui l'accompagnent et sur lesquels :
- la **figure 1** est une vue, en perspective et schématique, d'un chargeur, selon l'invention, comprenant quatre modules de chargement ;
- la **figure 2** est une vue éclatée, en perspective, d'un mode de réalisation d'un des modules de chargement de la figure 1 ;
- la **figure 3** est une vue, en perspective, d'un mode de réalisation des moyens de fixation du bloc d'alimentation ou d'un module de chargement sur les rails de fixation et de liaison du chargeur, selon la figure 1.

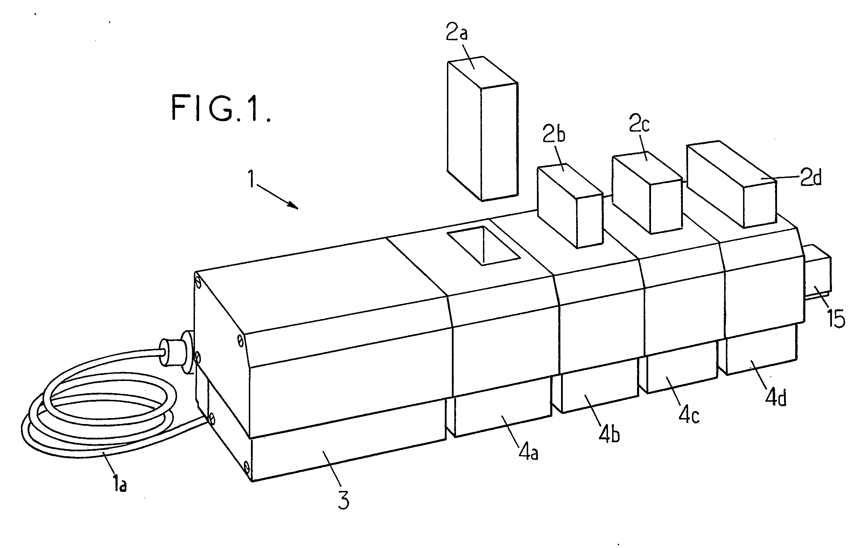

La figure 1 montre un chargeur automatique selon l'invention, illustré par exemple pour quatre batteries, accumulateurs ou piles rechargeables.

Le chargeur 1 comprend un bloc d'alimentation 3 alimenté, au moyen d'un câble 1a, par le réseau électrique 220 V ou 117 V, 50/60 Hz, et quatre modules de chargement 4a, 4b, 4c, 4d, pour des batteries d'accumulateurs 2a, 2b, 2c, 2d.

Le bloc d'alimentation est constitué de façon connue en soi et permet d'alimenter chaque module en tensions redressées et filtrées.

Les modules de chargement sont de constitution similaire, mais adaptés aux dimensions et caractéristiques (tension, capacité, vitesse de recharge recherchées, etc.) des batteries qu'ils doivent recharger.

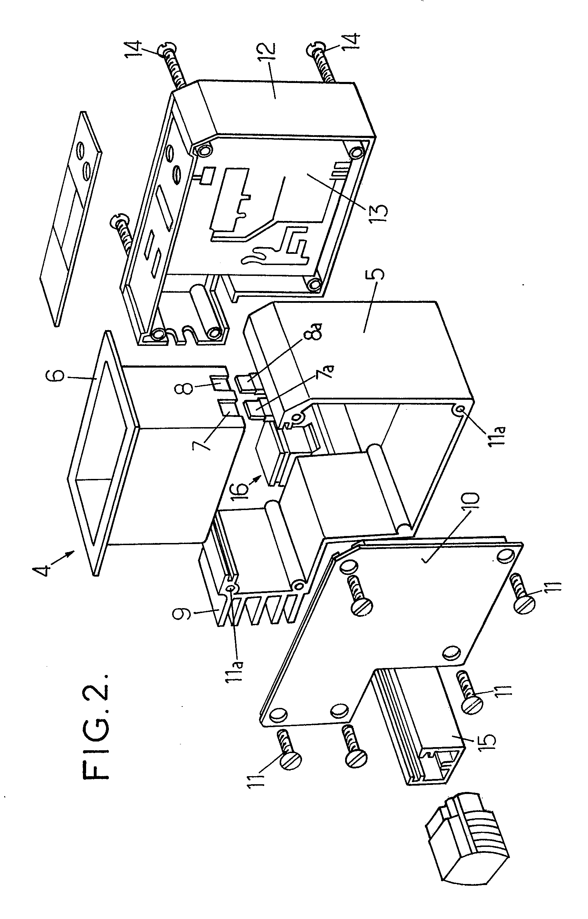

La figure 2 montre un module de chargement, référencé 4, du type selon l'invention et représentant un quelconque des modules 4a, 4b, 4c et 4d.

Le module 4 comporte un corps 5 de dimensions variables, qui sert de support à un réceptacle 6 dans lequel une batterie à recharger est introduite. Le fond du réceptacle 6 est connecté au module par les connexions électriques positive 7-7a et négative 8-8a.

Le corps 5 comporte par ailleurs des ailettes 9 de refroidissement, un couvercle latéral 10 démontable, fixé sur le corps 5 par des vis 11, vissées dans des trous taraudés 11a du corps, et un capot 12, également démontable et fixé sur le corps 5 par des vis 14, vissées dans des trous taraudés du corps.

Le capot 12 porte une carte électronique ou circuit intégré 13 assurant le fonctionnement du module.

Le chargeur 1 comprend par ailleurs deux rails longitudinaux 15a et 15b de fixation et de liaisons électriques entre le bloc d'alimentation 3 et les modules de charge, le bloc 3 et les modules 4a, 4b, 4c, 4d étant fixés rigidement, mais de façon amovible sur les rails 15a et 15b, ce qui permet leur remplacement ou leur réparation sans immobiliser le reste du chargeur.

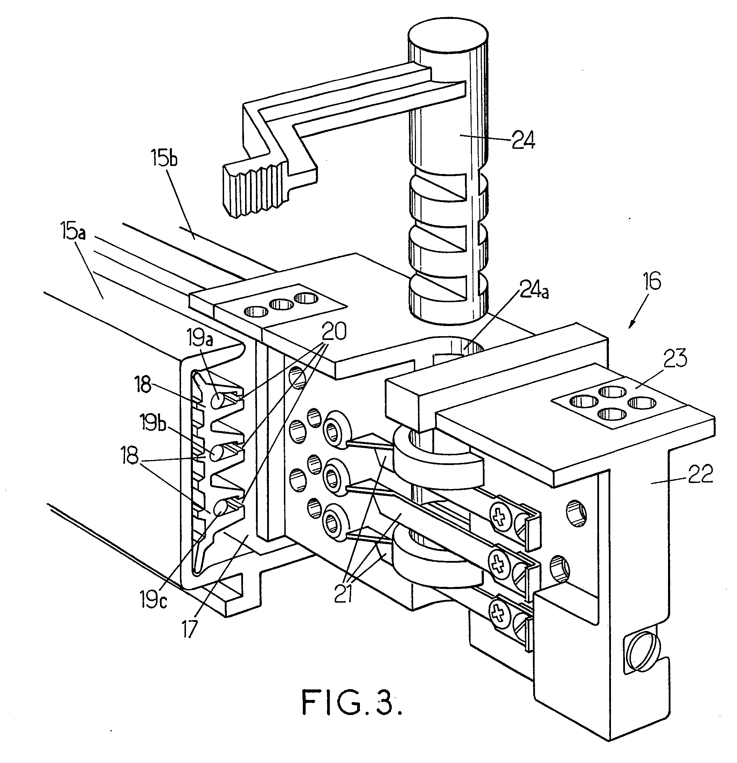

On a représenté sur la figure 3 un mode de réalisation avantageux des moyens 16 de fixation et de connexion du bloc et des modules de chargement sur les rails 15a et 15b.

Chaque rail 15a, 15b comprend une cavité longitudinale 17 ouverte le long de sa face supérieure, dans laquelle sont fixés trois chemins de conducteurs 18, ceux du rail 15a portant trois conducteurs 19a, 19b, 19c respectivement amenant les tensions de + 12 V, - 12 V et + 5 V pour la carte électronique 13, tandis que ceux du rail 15b amènent les tensions d'alimentation à + 24 V et - 24 V pour la charge.

Chaque chemin de câble 18 des rails 15a et 15b présente une saignée longitudinale 20, permettant la connexion des trois conducteurs, tels que 19a, 19b, 19c, avec trois languettes de contact 21, fixées sur un support 22 solidaire d'un module ou du bloc d'alimentation. Les languettes 21 sont raccordées électriquement, par exemple en 23, au module ou au bloc d'alimentation.

Le support 22 est agencé pour coopérer avec la cavité 17. Il peut glisser le long et à l'intérieur des rails 15a et 15b et permet la mise en place dans une position voulue sur les rails du module ou du bloc, ou le retrait de celui-ci. Lorsque le support est bloqué sur les rails, les languettes 21 sont mises en contact avec les conducteurs respectifs, tels que 19a, 19b, 19c.

Pour réaliser un blocage efficace, le support 22 peut recevoir, dans un logement 24a, une clé 24 de verrouillage/déverrouillage du support 22 sur les rails 15a, 15b, par pivotement de 90° de la clé.

Chaque module de chargement comporte une carte électronique 13 comprenant des moyens de démarrage automatique du chargement d'une batterie lorsque celle-ci est introduite dans le module et des moyens d'arrêt automatique du chargement de la batterie lorsque la charge est terminée, avec des moyens de signalisation de ces différents phénomènes.

La réalisation des moyens électroniques portés par la carte électronique 13 d'un module de chargement selon l'invention est décrite dans une demande de brevet déposée ce même jour par la demanderesse et invoquant la même priorité que la présente demande.

## Revendications

1. Chargeur (1) automatique apte à charger plusieurs batteries amovibles (2a, 2b, 2c, 2d), du type accumulateus ou piles rechargeables, comprenant un bloc (3) d'alimentation en électricité à partir du réseau et plusieurs modules (4a, 4b, 4c, 4d) de charge de batterie, chaque module comportant des moyens de régulation pour délivrer des tensions de charge à la batterie correspondante à charger, et des moyens (13) de détection de la présence de ladite batterie dans le module et de commande automatique et de signalisation de l'enclenchement et de l'arrêt de la charge de ladite batterie, caractérisé en ce qu'il comporte au moins un rail allongé (15a, 15b) de liaison électrique et de fixation sur lequel sont connectés électriquement et fixés rigidement, mais de façon amovible, le bloc (3) d'alimentation et les modules de chargement (4a, 4b, 4c, 4d), ce rail de liaison portant une série de conducteurs (19a, 19b 19c) pour l'amenée des différentes tensions du bloc aux modules, tandis que le bloc et chaque module comportent des languettes (21) qui sont en contact électrique avec lesdits conducteurs lorsque le bloc ou chaque module est fixé rigidement sur ledit rail.

2. Chargeur selon la revendiction 1, caractérisé en ce que le rail allongé (15a, 15b) comporte, dans la direction d'allongement, des chemins (18) de conducteurs aptes à recevoir chacun un conducteur (19a, 19b, 19c) et présentant une saignée latérale longitudinale (20) apte à recevoir une languette (21) du bloc (3) ou d'un module 4a, 4b, 4c, 4d).

3. Chargeur selon la revendication 1 ou 2, caractérisé en ce que le bloc (3) et les modules (4a, 4b, 4c, 4d) comportent des moyens (24) de verrouillage et déverrouillage sur le rail (15a, 15b).

4. Chargeur selon l'une quelconque des revendications précédentes, caractérisé en ce qu'il comporte deux rails allongés (15a, 15b) entre lesquels sont disposés le bloc (3) et les modules (4a, 4b, 4c, 4d).

FIG.1.

EP 0 343 055 A1

FIG.2.

EP 0 343 055 A1

FIG.3.

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| Y | EP-A-0203847 (BLACK & DECKER INC.) <br> * colonne 5, ligne 28 - colonne 8, ligne 15; figures 1-3 * | 1 | H02J7/00 |
| Y | GB-A-2166914 (C.A.WEIDMULLER GMBH) <br> * page 1, ligne 114 - page 2, ligne 96; figures 1-3 * | 1 | |
| A | | 2-4 | |
| A | EP-A-0147106 (D.J.BOOTY) <br> * page 5, ligne 17 - page 14, ligne 3; figures 1-6 * | 1-4 | |
| A | EP-A-0222381 (SANYO ELECTRIC CO LTD) <br> * page 11, ligne 1 - page 17, ligne 4; figure 1 * | 1 | |
| A | EP-A-0246336 (SOLID STATE CHARGERS INC.) <br> * colonne 5, ligne 42 - colonne 7, ligne 42; figures 1-9 * | 1 | DOMAINES TECHNIQUES RECHERCHES (Int. Cl.4) |
| A | FR-A-2346874 (OY NOKIA AB) <br> * revendications 1-3; figures 1-7 * | 2, 3 | H02J <br> H01R |

Le présent rapport a été établi pour toutes les revendications

| Lieu de la recherche | Date d'achèvement de la recherche | Examinateur |
|---|---|---|
| LA HAYE | 31 JUILLET 1989 | FOURRICHON P.M.I. |